(19) Europäisches Patentamt
European Patent Office
Office européen des brevets

(11) **EP 4 256 412 B1**

(12) **FASCICULE DE BREVET EUROPEEN**

(45) Date de publication et mention
de la délivrance du brevet:
**05.11.2025 Bulletin 2025/45**

(21) Numéro de dépôt: **21830975.5**

(22) Date de dépôt: **03.12.2021**

(51) Classification Internationale des Brevets (IPC):
**G05D 1/242** (2024.01)   **G05D 1/243** (2024.01)
**G05D 101/15** (2024.01)   **G01S 17/86** (2020.01)
**G01S 17/931** (2020.01)   **G05B 13/02** (2006.01)
**G06N 3/044** (2023.01)   **G06N 3/045** (2023.01)
**G06N 3/084** (2023.01)

(52) Classification Coopérative des Brevets (CPC):
**G05D 1/0248; G01S 17/86; G01S 17/931;
G05B 13/027; G06N 3/044; G06N 3/0442;
G06N 3/045; G06N 3/0455; G06N 3/0464;
G06N 3/084; G06N 3/09**

(86) Numéro de dépôt international:
**PCT/EP2021/084275**

(87) Numéro de publication internationale:
**WO 2022/117875 (09.06.2022 Gazette 2022/23)**

(54) **SYSTÈME ET PROCÉDÉ DE CONTRÔLE DE VÉHICULE À BASE D'APPRENTISSAGE MACHINE**

SYSTEM UND VERFAHREN ZUR STEUERUNG VON AUF MASCHINENLERNEN BASIERENDEN FAHRZEUGEN

SYSTEM AND METHOD FOR CONTROLLING MACHINE LEARNING-BASED VEHICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2020 FR 2012721**

(43) Date de publication de la demande:
**11.10.2023 Bulletin 2023/41**

(73) Titulaire: **Ampere SAS**
**92100 Boulogne-Billancourt (FR)**

(72) Inventeurs:
• **ANCORA, Andrea**
**06560 VALBONNE (FR)**
• **AUBERT, Sebastien**
**06560 VALBONNE (FR)**
• **REZARD, Vincent**
**06560 VALBONNE (FR)**
• **WEINGERTNER, Philippe**
**06560 VALBONNE (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
• **DIRDAL JOHANN: "End-to-end learning and sensor fusion with deep convolutional networks for steering an off-road unmanned ground vehicle", 11 June 2018 (2018-06-11), XP055790569, Retrieved from the Internet <URL:https://ntnuopen.ntnu.no/ntnu-xmlui/ bitstream/handle/11250/2558926/ 18621_FULLTEXT.pdf?sequence=1& isAllowed=y> [retrieved on 20210326]**

**(Cont. page suivante)**

- **LUYANG JING ET AL: "An Adaptive Multi-Sensor Data Fusion Method Based on Deep Convolutional Neural Networks for Fault Diagnosis of Planetary Gearbox", SENSORS, VOL. 17, N. 2, 21 February 2017 (2017-02-21), pages 414, XP055706404, Retrieved from the Internet <URL:http://www.mdpi.com/1424-8220/17/2/414> [retrieved on 20200618], DOI: 10.3390/s17020414**

## Description

Domaine technique

L'invention concerne de manière générale les systèmes de contrôle et en particulier les systèmes et procédés de contrôle de véhicule.

Les véhicules automatisés ou semi-automatisés embarquent généralement des systèmes de contrôle tels que des systèmes d'aide à la conduite pour contrôler la conduite et la sécurité des véhicules, comme par exemple un système de régulation de distance ACC (acronyme pour l'expression anglo-saxonne correspondante «Adaptive Cruise Control ») utilisé pour réguler la distance entre les véhicules.

De tels systèmes d'aide à la conduite utilisent classiquement un système de perception comprenant un ensemble de capteurs (par exemple, des caméras, des LIDARs ou des RADARs) agencés sur le véhicule pour détecter des informations environnementales utilisées par le dispositif de contrôle pour contrôler le véhicule.

Le système de perception comprend un ensemble de modules de perception associés aux capteurs pour effectuer une détection d'objet et/ou une prédiction de position d'objets dans l'environnement du véhicule en utilisant les informations fournies par les capteurs.

Chaque capteur fournit des informations associées à chaque objet détecté. Ces informations sont ensuite délivrées en sortie des modules de perception à un système de fusion.

Le système de fusion capteur traite les informations d'objet délivrées par les modules de perception pour déterminer une vue améliorée et consolidée des objets détectés.

Dans les solutions existantes, des systèmes d'apprentissage sont utilisés par le système de perception pour prédire la position d'un objet (tels que par exemple les systèmes SSD, YOLO, SQUEEZEDET). Une telle prédiction est effectuée en mettant en œuvre une phase d'apprentissage hors ligne (« offline » en langue anglo-saxonne), utilisant un historique de données déterminées ou mesurées dans des fenêtres de temps antérieures. L'apprentissage étant 'hors ligne', les données collectées en temps réel par le système de perception et les modules de fusion ne sont pas utilisées pour l'apprentissage, l'apprentissage étant effectué dans des phases où le dispositif d'aide à la conduite n'est pas en fonctionnement.

Pour réaliser cette phase d'apprentissage hors ligne, une base de données d'images d'apprentissage et un ensemble de tables comprenant des informations de réalité de terrain sont classiquement utilisées. Un algorithme d'apprentissage machine est mis en œuvre pour initialiser les poids du réseau de neurones à partir d'une base de données d'images. Dans les solutions existantes, cette phase d'initialisation des poids est mise en œuvre « hors ligne », c'est à dire en dehors des phases d'utilisation du système de contrôle de véhicule.

Le réseau de neurones avec les poids ainsi figés peut ensuite être utilisé dans une phase dite de généralisation mise en œuvre « en ligne » (« offline » en langue anglo-saxonne) pour estimer des caractéristiques d'objets dans l'environnement du véhicule, par exemple détecter des objets dans l'environnement du véhicule ou prédire des trajectoires d'objets détectés pendant le fonctionnement en ligne (« online ») du système d'aide à la conduite.

Ainsi, dans les solutions existantes, la phase d'apprentissage qui permet de fixer les poids du réseau de neurones est effectuée hors ligne, l'estimation des caractéristiques d'objet étant réalisée ensuite en ligne (i.e. pendant le fonctionnement du système de contrôle de véhicule) à partir de ces poids figés.

Cependant, un tel apprentissage ne permet pas de tenir compte de nouvelles images collectées en temps réel pendant le fonctionnement du véhicule et est limité aux données d'apprentissage stockées dans la base de données statique. Les objets détectés étant par définition non connus a priori, il n'est pas possible de mettre à jour les paramètres du modèle (poids du réseau de neurones) en temps réel. Ainsi, les nouvelles prédictions effectuées sont réalisées sans mise à jour des paramètres de modèles (poids du réseau de neurones), et peuvent donc être peu fiables.

Divers solutions d'apprentissage ont été proposées dans le contexte de l'aide à la conduite.

Par exemple, dans US 10 254 759 B1, il est proposé un procédé et un système utilisant des techniques d'apprentissage renforcées hors ligne. De telles techniques d'apprentissage sont utilisées pour entraîner un agent interactif virtuel. Elles reposent sur l'extraction d'informations d'observation pour un apprentissage dans un système de simulation non adapté à un système d'aide à la conduite dans un véhicule. En particulier, une telle approche ne permet pas de fournir une solution en ligne, embarquée, permettant d'améliorer en continu la prédiction à partir des données fournies par le système de fusion. Par ailleurs, cette approche n'est pas adaptée à la prédiction de trajectoire d'objet ou à la détection d'objet dans un véhicule.

Dans US 2018/0124423 A1, il est décrit un procédé et un système de prédiction de trajectoire pour déterminer des échantillons de prédiction pour des agents dans une scène basée sur une trajectoire passée. Les échantillons de prédiction sont associés à un score en fonction d'un score de probabilité qui incorpore des interactions entre agents et un contexte de scène sémantique. Les échantillons de prédiction sont itérativement affinés en utilisant une fonction de régression qui accumule le contexte de scène et des interactions d'agent à travers les itérations. Cependant, une telle approche n'est pas non plus adaptée à la prédiction de trajectoire et la détection d'objets dans un véhicule.

Dans US 2019/0184561 A1, une solution à base de réseaux de neurones a été proposée. Cette solution utilise un encodeur et un décodeur. Cependant, elle exploite une entrée très spécifique aux données de type LIDAR et à l'apprentissage hors ligne. Par ailleurs, une telle solution concerne des techniques d'aide à la décision ou de planification et n'est pas non plus adaptée à la prédiction de trajectoire ou la détection d'objets dans un véhicule.

Ainsi, les solutions existantes ne permettent pas d'améliorer l'estimation des caractéristiques d'objets détectés dans l'environnement du véhicule à base d'apprentissage machine.

D'autres solutions sont connues, comme par exemple l'article de Dirdal Johann : « End-to-end learning and sensor fusion with deep convolutional networks for steering an off-road unmanned ground vehicle », 11 juin 2018, ou celui de Luyang Jing et al. : "An adaptive Multi-Sensor data fusion method based on deep convolutional neural networkds for fault diagnosis of planetary gearbox, sensors vol. 17, n. 2, 21 février 2017 page 414, mais ces solutions ne donnent pas non plus satisfaction.

Il existe ainsi un besoin pour un dispositif et procédé de contrôle de véhicule à base d'apprentissage machine capables de fournir une estimation améliorée des caractéristiques relatives aux objets détectés dans l'environnement du véhicule.

Définition générale de l'invention

L'invention vient améliorer la situation en proposant un dispositif de contrôle mis en œuvre dans un véhicule , le véhicule comprenant un système de perception utilisant un ensemble de capteurs, chaque capteur fournissant des données, le système de perception comprenant un dispositif d'estimation d'une grandeur comprenant au moins une caractéristique relative à un ou plusieurs objets détectés dans l'environnement du véhicule, le dispositif d'estimation comprenant le module d'apprentissage en ligne utilisant un réseau de neurones pour estimer la grandeur, le réseau de neurones étant associé à un ensemble de poids. Avantageusement, le module d'apprentissage peut comprendre :

- un module de propagation vers l'avant configuré pour propager des données d'un ou plusieurs capteurs appliquées en entrée du réseau de neurones, de manière à fournir une sortie prédite comprenant une estimation de la grandeur,

- un système de fusion configuré pour déterminer une sortie de fusion en mettant en œuvre au moins un algorithme de fusion capteur à partir d'au moins certaines des valeurs prédites,

- un module de rétropropagation configuré pour mettre à jour les poids associés au réseau de neurone en ligne, en déterminant une fonction de perte représentant l'erreur entre une valeur prédite améliorée de la sortie de fusion et la sortie prédite et en effectuant une rétropropagation par descente de gradients.

Dans un mode de réalisation, la grandeur peut être un vecteur d'état comprenant des informations relatives à la position et/ou au mouvement d'un objet détecté par le système de perception.

Avantageusement, le vecteur d'état peut comprendre en outre des informations relatives à une ou plusieurs objets détectés.

Le vecteur d'état peut comprendre en outre des paramètres de trajectoire d'un objet cible.

Dans un mode de réalisation, la valeur prédite améliorée peut être déterminée en appliquant un filtre de Kalman.

Dans un mode de réalisation, le dispositif peut comprendre une mémoire tampon de rejeu configurée pour stocker les sorties prédites par le dispositif d'estimation et/ou les sorties de fusion délivrées par le système de fusion.

Dans certains modes de réalisation, le dispositif peut comprendre un encodeur pour réseau de neurones récurrents configuré pour encoder et compresser les données avant stockage dans la mémoire tampon de rejeu, et un décodeur configuré pour décoder et décompresser les données extraites de la mémoire tampon de rejeu.

En particulier, l'encodeur peut être un encodeur pour réseau de neurones récurrent et le décodeur peut être un décodeur pour réseau de neurones récurrent correspondant.

Dans certains modes de réalisation, la mémoire tampon de rejeu peut être prioritisée.

Le disposition peut mettre en œuvre une condition de test de données d'entrée appliquées en entrée d'un réseau de neurones, des données d'entrée étant supprimées de la mémoire tampon de rejeu si la fonction de perte entre la valeur prédite pour cette échantillon d'entrée et la sortie de fusion peut être inférieur à un seuil prédéfini.

Il est en outre proposé un procédé de contrôle mis en œuvre dans un véhicule, le véhicule comprenant un système de perception utilisant un ensemble de capteurs, chaque capteur fournissant des données, le procédé de contrôle comprenant une estimation d'une grandeur comprenant au moins une caractéristique relative à un ou plusieurs objets détectés dans l'environnement du véhicule, l'estimation mettant en œuvre une étape d'apprentissage en ligne utilisant un réseau de neurones pour estimer la grandeur, le réseau de neurones étant associé à un ensemble de poids. Avantageusement, l'étape d'apprentissage en ligne peut comprendre les étapes consistant à :

- propager des données d'un ou plusieurs capteurs appliquées en entrée du réseau de neurones, ce qui fournit une sortie prédite comprenant une estimation de la grandeur,

- déterminer une sortie de fusion en mettant en œuvre au moins un algorithme de fusion capteur à partir d'au moins certaines des valeurs prédites,

- mettre à jour les poids associés au réseau de neurone en ligne, en déterminant une fonction de perte représentant l'erreur entre une valeur prédite améliorée de la sortie de fusion et la sortie prédite en effectuant une rétropropagation par descente de gradients.

Brève description des dessins

D'autres caractéristiques, détails et avantages de l'invention ressortiront à la lecture de la description faite en référence aux dessins annexés donnés à titre d'exemple et qui représentent, respectivement :

[Fig.1] est un diagramme représentant un système d'aide à la conduite utilisant un apprentissage machine pour estimer des caractéristiques d'objets détectés, selon certains modes de réalisation de l'invention ;

[Fig.2] est un diagramme représentant un dispositif d'estimation, selon certains modes de réalisation de l'invention ;

[Fig.3] est un diagramme simplifié représentant le système d'aide à la conduite 10, selon un exemple de réalisation;

[Fig.4] est un organigramme représentant le procédé d'apprentissage en ligne du réseau de neurones, selon certains modes de réalisation ;

Fig.5] est un organigramme représentant le procédé d'apprentissage selon un exemple de réalisation, dans une application de l'invention à la prédiction de trajectoire ;

[Fig.6] montre un exemple d'implémentation du système de contrôle dans lequel le système de perception utilise un unique capteur de type caméra intelligente pour une application de prédiction de trajectoire d'objet; et

[Fig.7] montre un autre exemple de mode de réalisation du système de contrôle dans lequel un encodage/décodage des données prédites par le réseau de neurones est utilisé.

**Description détaillée**

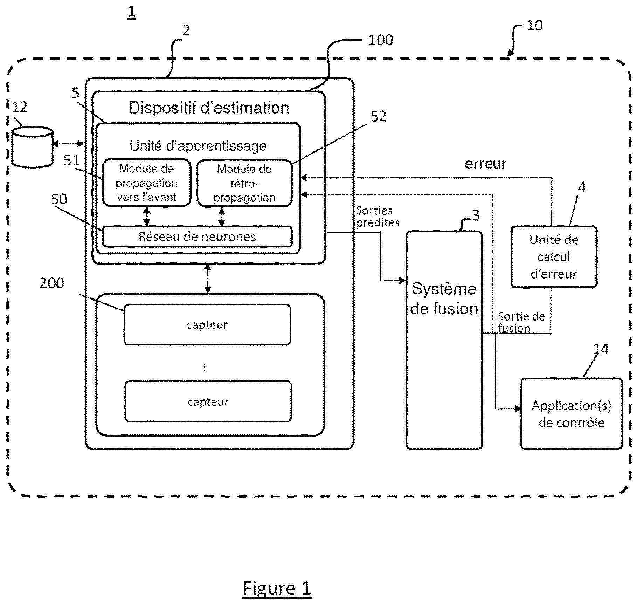

La figure 1 représente un système de contrôle 10 embarqué dans un équipement mobile 1, tel qu'un véhicule. La suite de la description sera faite en référence à un équipement mobile de type véhicule à titre d'exemple non limitatif.

Le système de contrôle 10 (encore appelé ci-après 'système d'aide à la conduite') est configuré pour aider le conducteur à effectuer des opérations ou manœuvres de conduite complexes, détecter et éviter des situations dangereuses, et/ou limiter l'impact de telles situations sur le véhicule 1.

Le système de contrôle 10 comprend un système de perception 2 et un système de fusion 3, embarqués sur le véhicule.

Le système de contrôle 10 peut comprendre en outre une unité de planification et d'aide à la décision et un ou plusieurs contrôleurs (non représentés).

Le système de perception 2 comprend un ou plusieurs capteurs 20 agencés dans le véhicule 1 pour mesurer des grandeurs relatives au véhicule et/ou à l'environnement du véhicule. Le système de contrôle 10 utilise les informations fournies par le système de perception 2 du véhicule 1 pour contrôler le fonctionnement du véhicule 1.

Le système d'aide à la conduite 10 comprend un dispositif d'estimation 100 configuré pour estimer une grandeur relative à une ou plusieurs caractéristiques d'objet représentant des caractéristiques d'un ou plusieurs objets détectés dans l'environnement du véhicule 1 en utilisant les informations fournies par le système de perception 2 du véhicule 1 et en mettant en œuvre un algorithme d'apprentissage machine ML en ligne utilisant un réseau de neurones 50.

Initialement, l'apprentissage est mis en œuvre pour apprendre les poids du réseaux de neurones, à partir d'une base de données d'apprentissage 12 stockant des valeurs passés (réalité de terrain) observées pour la grandeur en correspondance avec des données capturées par les capteurs.

Avantageusement, un apprentissage en ligne est en outre mis en œuvre pendant le fonctionnement du véhicule pour mettre à jour les poids du réseau de neurones en utilisant la sortie délivrée par le système de fusion 3, déterminée à partir de la sortie prédite par le système de perception 2 et en déterminant l'erreur entre une valeur prédite améliorée dérivée de la sortie système de fusion 3 et la sortie prédite délivrée par le système de perception 2.

Les poids du réseau de neurones 50 constituent les paramètres du modèle neuronal ou de perception représenté par le réseau de neurones.

La base de données d'apprentissage 12 peut comprendre des images d'objets (voitures par exemple) et de routes, et en association avec chaque image la valeur attendue de la grandeur relative aux caractéristiques d'objet correspondant à la réalité de terrain.

Le dispositif d'estimation 100 est configuré pour estimer (ou prédire) dans une phase dite de généralisation la grandeur de caractéristiques d'objets pour une image capturée par un capteur 200 en utilisant le réseau de neurones avec les derniers paramètres de modèle (poids) mis en jour en ligne. Avantageusement, la grandeur prédite est-elle même utilisée pour mettre à jour les poids du réseau de neurones 50 à partir de l'erreur entre la grandeur prédite par le système de perception 2 et la valeur de la grandeur obtenue après fusion par le système de fusion 3.

Un tel apprentissage, réalisé en ligne (« online ») pendant le fonctionnement du système d'aide à la conduite 10, permet de mettre à jour les paramètres du modèle, représentés par les poids du réseau de neurone 50, dynamiquement ou quasi dynamiquement au lieu d'utiliser des poids figés préalablement déterminés « hors ligne » selon l'approche de l'état de la technique.

Dans des modes de réalisation, la grandeur estimée par le dispositif d'estimation 100 peut comprendre des informations de positions relatives à un objet détecté dans l'environnement d'un véhicule, tel qu'un autre véhicule, dans une application à la détection d'objet, ou des données de trajectoire d'objet cible, dans une application à la prédiction de trajectoire d'objet cible.

Le système de contrôle 10 peut être configuré pour mettre en œuvre une ou plusieurs applications de contrôle 14, telle qu'une application de régulation à distance ACC apte à réguler la distance entre les véhicules, configurée pour mettre en œuvre un procédé de contrôle relatif au contrôle de la conduite ou de la sécurité du véhicule à partir des informations délivrées par le système de fusion 3.

Les capteurs 200 du système de perception 2 peuvent inclure différents types de capteurs, comme par exemple et sans limitation un ou plusieurs capteurs Lidar (Laser Detection And Ranging), un ou plusieurs radars, une ou plusieurs caméras qui peuvent être des caméras fonctionnant dans le visible et/ou des caméras fonctionnant dans l'infrarouge, un ou plusieurs capteurs à ultrasons, un ou plusieurs capteurs d'angle de volant, un ou plusieurs capteurs de vitesse de roue, un ou plusieurs capteurs de pression de freinage, un ou plusieurs capteurs de vitesse de lacet et d'accélération transversales, etc.

Les objets de l'environnement du véhicule 1 pouvant être détectés par le dispositif d'estimation 100 comprennent des objets mobiles tels que par exemple des véhicules circulant dans l'environnement du véhicule.

Dans les modes de réalisation où le système de perception 2 utilise des capteurs pour détecter des objets dans l'environnement du véhicule 1 (LIDAR et/ou RADAR par exemple), la grandeur de caractéristique d'objet estimée par le dispositif d'estimation peut être par exemple un vecteur d'état comprenant un ensemble de paramètres d'objet pour chaque objet détecté par le radar tels que par exemple :

- Le type d'objet détecté ;

- Une position associée à l'objet détecté ; et

- Une mesure d'incertitude représentée par une matrice de covariance.

Le système de fusion 3 est configuré pour appliquer un ou plusieurs algorithmes de traitement (algorithmes de fusion) aux grandeurs prédites par le système de perception 2 à partir des informations de différents capteurs 200 et fournir une sortie de fusion correspondant à une grandeur prédite consolidée pour chaque objet détecté déterminées à partir des grandeurs prédites pour l'objet à partir des informations de différents capteurs. Par exemple, pour des informations de positions d'un objet détecté, prédites par le dispositif d'estimation 100 à partir des informations de capteurs 200, le système de fusion 3 fournit des informations de positions plus précises correspondant à une vue améliorée de l'objet détecté.

Le système de perception 2 peut être associé à des paramètres de perception qui peuvent être définis hors connexion en calibrant les performances du système de perception 2 en fonction des capteurs 200 embarqués.

Avantageusement, le système de contrôle 10 peut être configuré pour :

- utiliser les données de sortie de l'unité de fusion 3 (données de fusion) passées et/ou futures par rapport à un instant courant ;

- Traiter de telles données de fusion passées et/ou futures pour déterminer une estimation plus précise de la sortie de l'unité de fusion 3 à un instant courant (ce qui fournit une sortie améliorée du système de fusion);

- Utiliser une telle sortie améliorée du système de fusion 3 en remplacement des données de réalité de terrain, stockées dans la base de données d'apprentissage 12, pour effectuer un apprentissage « en ligne » supervisé des modèles de perception et améliorer l'estimation de la grandeur de caractéristique d'objet (utilisée par exemple pour détecter des objets dans l'environnement du véhicule et/ou prédire des trajectoires d'objets cibles).

L'apprentissage en ligne peut être ainsi basé sur une sortie retardée du dispositif d'estimation 100.

Les modes de réalisation de l'invention exploitent ainsi avantageusement la sortie du système de fusion 3 pour mettre à jour en ligne les poids des réseaux de neurones.

En particulier, le dispositif d'estimation 100 peut comprendre une unité d'apprentissage **ML** 5 à base de réseau de neurones 50 mettant en œuvre :

- une phase initiale d'apprentissage (ou d'entraînement) pour entraîner le réseau de neurones 50 à partir de la base de données d'images 12,

- une phase de généralisation pour estimer (ou prédire) la grandeur de caractéristiques d'objet détecté (par exemple positions d'objet détecté ou prédiction de trajectoire d'objet) à partir des poids courants,

- un apprentissage en ligne pour mettre à jour les poids du réseau de neurones 50 à partir de la sortie du système de fusion (déterminée à partir de la grandeur prédite dans la phase B), les poids ainsi mis à jour étant utilisés pour de nouvelles estimations dans la phase de généralisation.

L'algorithme d'apprentissage ML (« Machine Learning » signifiant « apprentissage machine ») permet par exemple de prendre des images en entrée issues de capteur(s) et de retourner une grandeur estimée (sortie prédite par le système de perception 2) comprenant le nombre d'objets détectés (voitures par exemple) et les positions des objets détectés dans la phase de généralisation. L'estimation de cette grandeur estimée (sortie prédite par le système de perception 2) est améliorée par le système de fusion 3, qui fournit une sortie de fusion correspondant à la grandeur prédite consolidée.

Un réseau de neurone constitue un modèle de calcul imitant le fonctionnement des réseaux de neurones biologiques. Un réseau de neurones comprend des neurones interconnectés entre eux par des synapses généralement implémentées sous la forme de mémoires numériques (composants résistifs par exemple). Un réseau de neurones 50 peut comprendre une pluralité de couches successives, dont une couche d'entrée portant le signal d'entrée et une couche de sortie portant le résultat de la prédiction effectuée par le réseau de neurones et une ou plusieurs couches intermédiaires. Chaque couche d'un réseau de neurones prend ses entrées sur les sorties de la couche précédente.

Les signaux propagés en entrée et en sortie des couches d'un réseau de neurones 50 peuvent être des valeurs numériques (information codée dans la valeur des signaux), ou des impulsions électriques dans le cas d'un codage impulsionnel.

Chaque connexion (encore appelée « synapse ») entre les neurones du réseau de neurone 50 a un poids $\Theta$ (paramètre du modèle neuronal).

La phase d'entraînement (apprentissage) du réseau de neurone 50 consiste à déterminer les poids du réseau de neurones pour une utilisation dans la phase de généralisation.

Un algorithme ML (« Machine Learning » signifiant « apprentissage machine ») est appliqué dans la phase d'apprentissage pour optimiser ces poids.

En entraînant le modèle représenté par le réseau de neurones en ligne avec de nombreuses données incluant les sorties du système de fusion 3, le réseau de neurones 50 peut apprendre de manière plus précise l'importance qu'a eu un poids par rapport à un autre.

Dans la phase d'apprentissage initiale (qui peut se faire hors ligne), le réseau de neurones 50 initialise tout d'abord les poids aléatoirement et ajuste les poids en vérifiant si l'erreur entre la sortie obtenue du réseau de neurone 50 (sortie prédite) à un échantillon d'entrée tiré de la base d'apprentissage et la sortie cible du réseau de neurones (sortie attendue), calculée par une fonction de perte, diminue en utilisant un algorithme de descente de gradients. De nombreuses itérations de cette phase peuvent être implémentées, dans lesquels les poids sont mis à jour à chaque itération, jusqu'à ce que l'erreur atteigne une certaine valeur.

Dans la phase d'apprentissage en ligne, le réseau de neurones 50 ajuste les poids à partir de l'erreur entre :

- la sortie délivrée par le réseau de neurones 50 (sortie prédite) obtenue en réponse à des images fournies par les capteurs 200, et

- une valeur dérivée de la sortie de fusion consolidée à partir de telles sorties prédites par le dispositif d'estimation (sortie prédite améliorée).

**EP 4 256 412 B1**

L'erreur entre la prédiction du système de perception et la sortie de fusion est représentée par une fonction de perte L, en utilisant un algorithme de descente de gradients. De nombreuses itérations de cette phase peuvent être implémentées, dans lesquels les poids sont mis à jour à chaque itération, jusqu'à ce que l'erreur atteigne une certaine valeur.

L'unité d'apprentissage 5 peut comprendre un module de propagation vers l'avant 51 configuré pour appliquer, à chaque itération de la phase d'apprentissage en ligne, les entrées (échantillons) au réseau de neurones 50 qui va produire, en réponse à une telle entrée, une sortie, dite sortie prédite.

L'unité d'apprentissage 5 peut comprendre en outre un module de rétropropagation 52 pour rétropropager l'erreur afin de déterminer les poids du réseau de neurones en appliquant un algorithme de rétropropagation par descente de gradient.

L'unité d'apprentissage ML 5 est avantageusement configurée pour effectuer une rétroprogation vers l'arrière de l'erreur entre la sortie prédite améliorée dérivée de la sortie de fusion et la sortie prédite délivrée par le système de perception 2 et mettre à jour les poids du réseau de neurones « en ligne ».

L'unité d'apprentissage 5 permet ainsi d'entraîner le réseau de neurones 50 pour une prédiction « en ligne » (en temps réel ou non) de manière dynamique ou quasi dynamique et ainsi d'obtenir une prédiction plus fiable.

Dans les modes de réalisation où le dispositif d'estimation 100 est configuré pour déterminer des caractéristiques d'objets détectés par le système de perception 2 (par exemple par un radar), le dispositif d'estimation 100 peut fournir par exemple une sortie prédite représentant un vecteur d'état d'objet comprenant un ensemble d'informations de position prédite (sortie de perception). Le système de perception 2 peut transmettre au système de fusion 3 les vecteurs d'état d'objets correspondant aux différents objets détectés (vecteurs d'état d'objet de perception), tels que déterminés par le dispositif d'estimation 100. Le système de fusion 3 peut appliquer des algorithmes de fusion pour déterminer un vecteur d'état d'objet consolidé (sortie de fusion) pour chaque objet détecté plus précis que la sortie de perception à partir des vecteurs d'état déterminées par le système de perception 2 pour les objets détectés. Avantageusement, les vecteurs d'état d'objet consolidés (encore appelés ci-après « vecteurs d'état d'objet améliorés »), déterminés par le système de fusion 3 pour les différents objets, peuvent être utilisés par le module de rétropropagation 52 de l'unité d'apprentissage en ligne 5 pour mettre à jour les poids en fonction de l'erreur entre :

- la sortie prédite améliorée dérivée de la sortie du système de fusion 3 (vecteurs d'état d'objet améliorés), et
- la sortie du système de perception 2 (vecteurs d'état d'objet de perception).

Le système d'aide à la conduite 10 peut comprendre une unité de calcul d'erreur 4 pour calculer l'erreur entre la sortie prédite améliorée dérivée du système de fusion 3 (vecteurs d'état d'objet améliorés) et la sortie du système de perception 2 (vecteurs d'état d'objet de perception).

L'erreur ainsi calculée est représentée par une fonction de perte. Cette fonction de perte est ensuite utilisée pour la mise à jour des paramètres des modèles de perception. Les paramètres d'un modèle de perception, encore appelé « modèle neuronal », correspondent aux poids $\Theta$ du réseau de neurones 50 utilisé par le dispositif d'estimation 100.

L'algorithme de rétropropagation peut être avantageusement un algorithme par descente de Gradient Stochastique basé sur le gradient de la fonction de perte (le gradient de la fonction de perte sera noté ci-après ($\nabla L(y^{(i)}, \hat{y}^{(i)})$).

Le module de rétropropagation 52 peut être configuré pour calculer les dérivées partielles de la fonction de perte (métrique d'erreur déterminée par l'unité de calcul d'erreur 4) par rapport aux paramètres du modèle d'apprentissage machine (poids des réseaux de neurones) en mettant en œuvre l'algorithme de rétropropagation par descente de gradient.

Les poids des réseaux de neurones peuvent ainsi être mis à jour (ajustés) à chaque mise à jour fournie en sortie du système de fusion 3 et donc à chaque mise à jour de la métrique d'erreur calculée par l'unité de calcul d'erreur 4.

Une telle interface entre le système de fusion 3 et le système de perception 2 permet avantageusement de mettre en œuvre une rétropropagation « en ligne ».

Les poids peuvent être mis à jour localement ou à distance en utilisant par exemple une communication V2X lorsque le véhicule 1 est équipé de moyens de communication V2X (véhicule autonome par exemple).

Les poids ainsi mis à jour correspondent à une petite modification des poids qui avaient été utilisés pour la détection d'objet ou la prédiction de trajectoire d'objet ayant servi à générer la métrique d'erreur exploitée pour l'apprentissage en ligne. Ils peuvent ensuite être utilisés pour une nouvelle détection d'objet ou prédiction de trajectoires par les capteurs, laquelle fournit à son tour de nouvelles informations relatives aux objets détectés qui seront utilisées itérativement pour mettre de nouveau à jours les poids en ligne, selon une boucle de rétroaction.

De telles mises à jour itératives en ligne (online) des poids du modèle de perception ou de prédiction permettent d'améliorer de manière incrémentale et en continu les modèles de perception ou de prédiction.

Les estimations des vecteurs d'état d'objet peuvent être ainsi utilisées pour déterminer une mesure d'erreur adaptée à un apprentissage en ligne via une rétropropagation d'erreur.

Les modes de réalisation de l'invention permettent ainsi une prédiction de caractéristiques d'objet détectés plus précise (détection d'objet et/ou prédiction de trajectoire d'objet par exemple) qui peut être utilisé en parallèle, même si la prédiction est retardée.

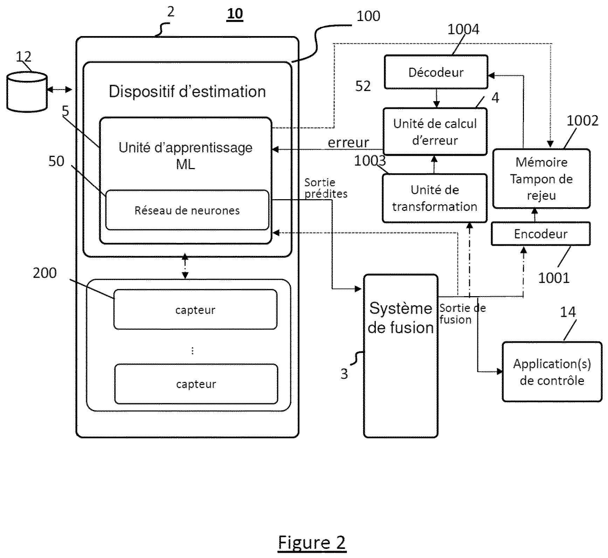

La figure 2 est un diagramme représentant un dispositif d'estimation 100, selon certains modes de réalisation.

Dans un tel mode de réalisation, le dispositif d'estimation 100 peut comprendre un encodeur 1001 configuré pour encoder et compresser les informations d'objet retournées par le système de fusion 3 et/ou le système de perception 2 pour une utilisation par l'unité d'apprentissage 5. Dans un mode de réalisation, l'encodeur 1001 peut être un encodeur pour un Réseau Neuronal Récurrent (RNN) par exemple de type RNN LSTM (acronyme pour « Long Short-Term Memory » signifiant « à mémoire court et long terme »). Un tel mode de réalisation est particulièrement adapté aux cas où les informations d'objet nécessitent une mémoire importante comme par exemple les informations de trajectoire d'objet utilisées pour la prédiction de trajectoire d'objet. La suite de la description sera faite principalement en référence à un encodeur 1001 de type RNN à titre d'exemple non limitatif.

Le dispositif d'estimation 100 peut comprendre en outre une mémoire tampon de rejeu d'expérience 1002 configurée pour stocker les données d'objet compressées (données de trajectoire d'objet par exemple).

Dans un mode de réalisation, le dispositif d'estimation 100 peut comprendre une unité de transformation 1003 configurée pour transformer des données non « indépendantes et identiquement distribuées » en données « indépendantes et identiquement distribuées » (« iid ») en utilisant un filtrage ou un échantillonnage retardé des données de la mémoire tampon de rejeu 1002.

En effet, dans certains modes de réalisation, lorsque le procédé d'estimation mis en œuvre par le dispositif d'estimation 100 est par exemple basé sur un algorithme de prédiction de trajectoire, les données utilisées par le dispositif d'estimation sont de préférence être des données indépendantes et identiquement distribuées (« iid »).

En effet, des échantillons fortement corrélés peuvent fausser l'hypothèse selon laquelle les données sont indépendantes et identiquement distribuées (iid), qui est à vérifier pour l'estimation des gradients par l'algorithme de descente de gradient.

La mémoire tampon de rejeu 1002 peut être utilisée pour collecter les données, de manière séquentielle, quand elles arrivent, en écrasant les données stockées préalablement dans la mémoire tampon 1002, ce qui permet de renforcer l'apprentissage.

Pour effectuer la mise à jour des poids pendant l'apprentissage en ligne, un lot de données peut être aléatoirement échantillonné à partir de la mémoire tampon de rejeu 1002 et utilisé pour mettre à jour les poids du modèle neuronal. Certains échantillons peuvent avoir plus d'influence que d'autres sur la mise à jour des paramètres de poids. Par exemple, un gradient de la fonction de perte ($\nabla L(y^{(i)}, \hat{y}^{(i)})$ plus important peut conduire à des mises à jour plus importantes des poids $\theta$. Dans un mode de réalisation, le stockage dans la mémoire tampon 1002 peut être en outre priorisé et/ou un rejeu de la mémoire tampon priorisé peut être mis en œuvre.

Dans un tel mode de réalisation, le dispositif d'estimation 100 permet ainsi d'effectuer un apprentissage machine en ligne et incrémental pour entraîner les réseaux de neurones en utilisant les données d'objet (données de trajectoires par exemple) compressées et encodées, puis stockées dans la mémoire tampon 1002.

Un décodeur 1004 peut être utilisé pour décoder les données extraites de la mémoire tampon de rejeu 1002. Le décodeur 1004 est configuré pour effectuer une opération inverse à celle mise en œuvre par l'encodeur 1001. Ainsi, dans le mode de réalisation où un encodeur 1001 de type RNN est utilisé, un décodeur 1004 de type RNN est également utilisé.

Les modes de réalisation de l'invention fournissent avantageusement une boucle de rétroaction entre la sortie du système de fusion 3 et le système de perception 2.

Les modes de réalisation de l'invention permettent ainsi de consolider les informations associées à chaque objet détecté par une pluralité de capteurs 200 de telle sorte que la précision de l'information est améliorée au niveau de la sortie du système de fusion 3 par rapport à l'information fournie par chaque unité de perception 20 associée à un capteur individuel 200. L'erreur entre la sortie du système de perception 2 et la sortie du système de fusion 3 est calculée et est utilisée pour guider un apprentissage « en ligne » (« online ») et une mise à jour des poids du modèle de perception (poids du réseau de neurones 50). L'erreur est ensuite rétropropagée vers le modèle de réseau de neurones 50 et des dérivées partielles de la fonction d'erreur (encore appelée « fonction de coût ») pour chaque paramètre (i.e. poids) du modèle de réseau de neurone sont calculées.

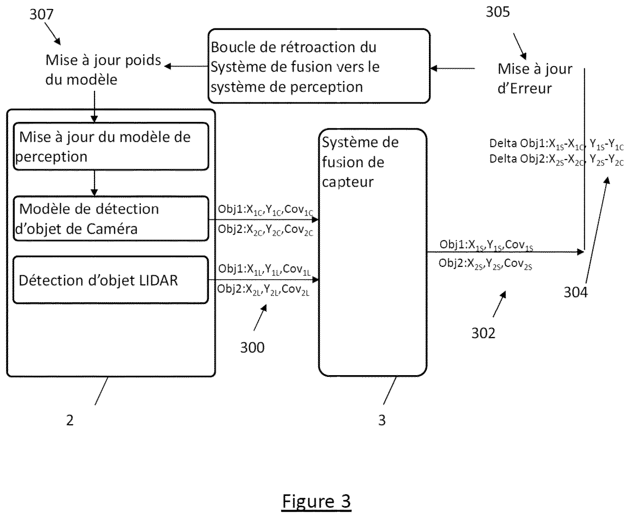

La figure 3 est un diagramme simplifié représentant le fonctionnement du système d'aide à la conduite 10 selon un exemple de réalisation.

Dans l'exemple de la figure 3, il est considéré un pipeline de deux capteurs 200 à titre d'exemple non limitatif. Il est en outre supposé qu'un modèle base de réseau de neurones convolutionnel CNN est utilisé pour la détection d'objet par un capteur 200 de type caméra et un capteur 200 de type LIDAR. Il convient toutefois de noter que l'invention peut plus généralement s'appliquer à tout modèle de réseau de neurones capable d'effectuer un apprentissage en ligne dans un pipeline où un système de perception 2 est suivi d'un système de fusion 3.

En considérant plus généralement un pipeline de M capteurs, en supposant que chaque capteur 200-i parmi les M capteurs détecte P objets, la grandeur estimée par le dispositif d'estimation 100 pour chaque capteur et chaque k-ème objet détecté par un capteur 200-i peut être représentée par un vecteur d'état comprenant :

- La position $(x_{ki}, y_{ki})$ de l'objet $Obj_k$ dans un repère cartésien ayant un axe d'abscisse x et un axe d'ordonnée y choisi :

- Une matrice de covariance $Cov_{ki}$ associée à l'objet $Obj_{jk}$ qui capture une mesure d'incertitude des prédictions effectuées par le capteur 200-i.

Dans l'exemple de la figure 3, il est considéré par exemple deux capteurs 200-1 et 200-2, le premier capteur 200-1 étant la caméra et le deuxième capteur 200-2 étant le LIDAR, chaque capteur détectant chacun deux mêmes objets $Obj_1$ et $Obj_2$.

La grandeur prédite à partir des données capturées par le premier capteur 200-1 de type caméra (« C ») peut alors comprendre :

- le vecteur d'état suivant pour l'objet $Obj_1$ : $\{x_{1C}, y_{1C}, Cov_{1C}\}$ comprenant les données de position $x_{1C}, y_{1C}$ du premier objet Obj1 et la matrice de covariance $COV_{1C}$ ;
- le vecteur d'état suivant pour l'objet $Obj_2$ : $\{x_{2L}, y_{2L}, Cov_{2L}\}$ comprenant les données de position $x_{2L}, y_{2L}$ du deuxième objet $Obj_2$ et la matrice de covariance $Cov_{2L}$.

La grandeur prédite à partir des données capturées par le deuxième capteur 200-2 de type Lidar (« L ») peut comprendre :

- le vecteur d'état suivant pour l'objet Obj1 : $\{x_{1S}, y_{1S}, Cov_{1S}\}$ comprenant les données de position $x_{1S}, y_{1S}$ du premier objet Obj1 et la matrice de covariance $Cov_{1S}$ associée au premier objet et au capteur 200-1;

- le vecteur d'état suivant pour l'objet Obj2 : $\{x_{2L}, y_{2L}, Cov_{2L}\}$ comprenant les données de position $x_{2L}, y_{2L}$ du deuxième objet Obj2 et la matrice de covariance $Cov_{2L}$ associée au deuxième objet et au capteur 200-2.

Les informations relatives aux objets détectés fournies par le système de perception peuvent être ensuite consolidées (en les fusionnant) par le système de fusion 3 qui détermine à partir des informations de capteur consolidées, une grandeur prédite consolidée (sortie de fusion) comprenant, pour chaque objet détecté Objk, le vecteur d'état $(x_{kS}, y_{kS}, CovkS)$, comprenant les données de position $(x_{kS}, y_{kS})$ consolidées pour le premier objet Obj1 et la matrice de covariance $Cov_{kS}$ consolidée associée au premier objet.

Les coordonnées $(x_{kS}, y_{kS})$ sont déterminées à partir des informations (xik, yik) fournies pour chaque objet k et chaque capteur 200-i. La matrice de covariance $Cov_{kS}$ est déterminée à partir des informations $Cov_{ki}$ fournies pour chaque objet k et chaque capteur i.

Dans l'exemple considéré de deux capteurs comprenant un capteur de type caméra et un capteur LIDAR, les deux capteurs détectant deux objets, les informations relatives aux objets détectés consolidées par l'unité de fusion 2 comprennent :

- le vecteur d'état suivant pour l'objet Obj1 : $\{x_{1S}, y_{1S}, Cov_{1S}\}$ comprenant les données de position consolidées pour le premier objet Obj1 à partir des informations $x_{1C}, y_{1C}, x_{1L}, y_{1L}$ et la matrice de covariance consolidée associée au premier objet à partir de $Cov_{1C}$ et $Cov_{1L}$;

- le vecteur d'état suivant pour l'objet Obj2 : $x_{2S}, y_{2S}, Cov_{2S}$ comprenant les données de position consolidées pour le deuxième objet Obj2 à partir des informations $x_{2C}, y_{2C}, x_{2L}, y_{2L}$ et la matrice de covariance consolidée associée au deuxième objet à partir de $Cov_{2C}$ et $Cov_{2L}$.

Les informations de positionnement $x_{kS}, y_{kS}$ fournies par l'unité de fusion 2 pour chaque k-ème objet ont une incertitude associée inférieure ou égale à celle associée aux informations de positionnement fournies individuellement par les capteurs 200-i. Il existe ainsi une erreur mesurable entre la sortie du système de perception 2 et la sortie de l'unité de fusion 3.

L'algorithme de rétropropagation par descente de Gradient Stochastique utilise cette erreur entre la sortie du système de perception 2 et la sortie de l'unité de fusion 3, représentée par la fonction de perte, pour mettre à jour les poids du réseau de neurones 50.

La boucle de rétroaction entre la sortie du système de fusion 3 et l'entrée du système de perception 2 permet ainsi d'exploiter la métrique d'erreur pour mettre à jour en ligne les poids du modèle représenté par le réseau de neurones 50, utilisé par le dispositif d'estimation 100. La métrique d'erreur est donc utilisée comme entrée du module d'apprentissage 5 pour un apprentissage en ligne tandis que la sortie de l'apprentissage en ligne est utilisée pour mettre à jour le modèle de perception représenté par le réseau de neurones 50. La précision du dispositif d'estimation (détection ou prédiction) est par conséquent continuellement améliorée par rapport aux systèmes d'aide à la conduite de l'art antérieur qui effectuent l'apprentissage et la mise à jour des poids « hors ligne » (« offline »).

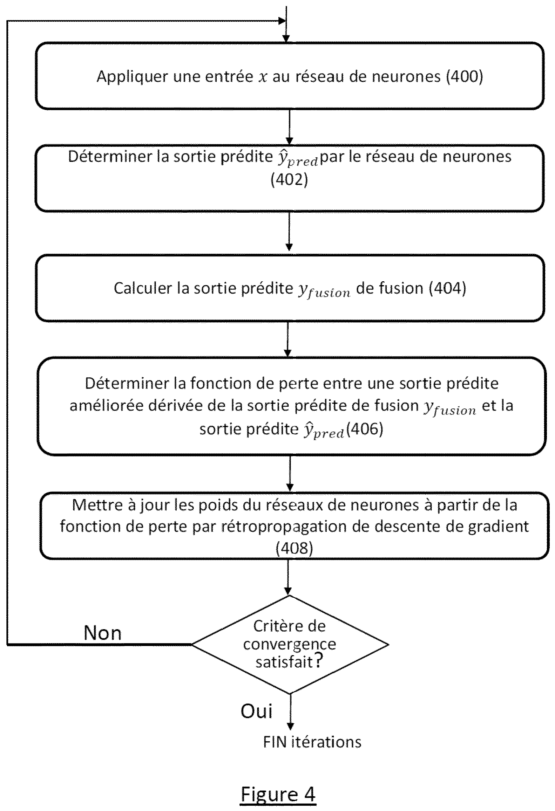

La figure 4 est un organigramme représentant le procédé d'apprentissage en ligne du réseau de neurones, selon certains modes de réalisation.

Le procédé d'apprentissage à base d'apprentissage ML utilise un ou plusieurs réseaux de neurone 50 paramétrisés par un ensemble de paramètres $\theta$ (poids du réseau de neurones) et :

- Les valeurs prédites $\hat{y}_k$ par le réseau de neurones en réponse à des données d'entrées, encore appelés « échantillons d'entrée », notées $x = image_k$. Les sorties ou valeurs prédites $\hat{y}_k$ sont définies par : $\hat{y}_k = NeuralNet\,(image_k,\,\theta)$,

- Une fonction de coût, encore appelée fonction de perte $L(y_k,\,\hat{y}_k)$ définissant une erreur entre :

  • une valeur prédite améliorée $y_k$ dérivée de la sortie $y_{fusion}$ du système de fusion 3, la sortie de fusion étant calculée à partir de sorties prédites $\hat{y}_k$ délivrées par le système de perception 2, et
  • une valeur prédite $\hat{y}_k$ par le réseau de neurones en réponse à des données d'entrée représentant des images capturées par un ou plusieurs capteurs 200.

Le système de fusion 3 (temps-réel ou non, retardé ou non) fournit en effet une estimation $y_{fusion}$ plus précise des données d'objet $\hat{y}_k$ obtenue après application d'un ou plusieurs algorithmes de fusion implémentés par le système de fusion 3.

Dans des modes de réalisation, la valeur prédite améliorée $y_k$ (encore notée $\hat{x}_{K|N}$) dérivée de la sortie de fusion $y_{fusion}$ peut être obtenue en effectuant un traitement réalisé par l'unité de transformation 1003, en appliquant par exemple un filtre de Kalman. Dans un mode de réalisation, la valeur prédite améliorée $y_k$ peut-être la sortie de fusion $y_{fusion}$ ellemême.

Le procédé d'apprentissage utilise en outre :

- Une approximation de la fonction de perte $L(y_k,\,\hat{y}_k)$ ;

- Une mise à jour des poids $\Theta$ par descente de Gradient des paramètres de réseau telle que :
  $\theta \leftarrow \theta - \alpha\nabla_\theta\,L(y_k,\,\hat{y}_k)$ où $\nabla_\theta\,L(y_k,\,\hat{y}_k)$ représente le gradient de la fonction de perte.

Plus précisément, à l'étape 400, une image x correspondant à un ou plusieurs objets détectés est capturée par un capteur 200 du système de perception 2 et est appliquée au réseau de neurones 50.

A l'étape 402, la réponse $\hat{y}_k$ du réseau de neurones 50 à l'entrée x, représentant la sortie prédite par le réseau de neurones 50, est déterminée en utilisant la valeur courante des poids $\theta$ selon :

$$\hat{y}_k = NeuralNetwork\,(x,\theta)$$

La sortie prédite $\hat{y}_k$ en réponse à cette entrée xcorrespond à une grandeur estimée par le dispositif d'estimation 100 relative à des caractéristiques d'objets détectés dans l'environnement du véhicule. Par exemple, dans une application à la détection d'objet dans laquelle la grandeur estimée par le dispositif d'estimation 100 est un vecteur d'état d'objet comprenant les données de position de l'objet détecté et la matrice de covariance associée, la sortie prédite $\hat{y}_k$ pour l'image x capturée par le capteur 200 représente le vecteur d'état prédit par le réseau de neurones à partir de l'image x détectée.

A l'étape 403, la paire de valeurs incluant l'entrée x et la sortie prédite $\hat{y}_k$ obtenue peut être stockée en mémoire.

Les étapes 402 et 403 sont réitérées pour des images x correspondant à des captures prises par différents capteurs 200.

A l'étape 404, lorsqu'une condition d'envoi au système de fusion 3 est détectée (par exemple expiration d'un temps donné ou prédéfini), la sortie de fusion $y_{fusion}$, correspondant aux différentes valeurs prédites $\hat{y}_k$ est calculée par le système de perception 2, ce qui fournit une estimation améliorée de la grandeur relative aux caractéristiques d'objets détectés (par exemple données de position ou données de trajectoire d'un objet cible). La sortie de fusion $y_{fusion}$ est déterminée en appliquant au moins un algorithme de fusion aux différentes valeurs prédites $\hat{y}_k$ correspondant aux différents capteurs 200.

Dans un mode de réalisation, les échantillons correspondant à des observations cumulées pendant une période de temps prédéfinie (par exemple 5 secondes) peuvent être stockés dans une mémoire tampon de rejeu d'expérience 1002 qui peut être priorisée ou non. Dans un mode de réalisation, les échantillons peuvent être au préalable compressés et encodés par un encodeur 1001 (encodeur RNN par exemple) avant stockage dans la mémoire de rejeu 1002.

A l'étape 406, l'erreur entre une sortie prédite améliorée dérivée des sorties de fusion $y_k$ du système de fusion et la sortie $\hat{y}_k$ du système de perception 2 est calculée.

La sortie prédite améliorée $y_k$ peut-être une sortie (notée $\hat{x}_{K|N}$) dérivée de la sortie du système de fusion en appliquant un traitement (filtrage de Kalman par exemple mis en œuvre par l'unité de transformation 1003). Dans un mode de réalisation, la sortie de fusion peut être directement utilisée comme sortie prédite améliorée. Cette erreur est représentée par une fonction de perte $L(y_k, y_k)$. La fonction d'erreur peut être déterminée à partir des données stockées dans la mémoire tampon 1002 après décodage éventuel par un décodeur 1004 et de la sortie prédite améliorée $y_k$.

A l'étape 408, les poids du réseau de neurones sont mis à jour en appliquant un algorithme de rétropropagation par descente de gradient stochastique pour déterminer le gradient de la fonction de perte $\nabla_\theta L(y_k, \hat{y}_k))$

Les poids peuvent être mis à jour en remplaçant chaque poids $\theta$ par la valeur $\theta - \alpha \nabla L(y_k, \hat{y}_k))$ :

$$\theta \leftarrow \theta - \alpha \nabla_\theta \mathrm{L}(y_k, \hat{y}_k))$$

Les étapes 404 et 408 peuvent être répétées jusqu'à ce qu'une condition de convergence soit détectée.

Le système d'aide à la conduite 10 permet ainsi de mettre en œuvre un apprentissage en ligne, incrémental, utilisant un réseau de neurones paramétrisé par un ensemble de poids $\theta$ mis en jour en continu, en ligne.

Dans un mode de réalisation, la sortie prédite $y_k$ par le réseau de neurones 50 peut être la réponse du réseau de neurones 50 à une valeur d'entrée correspondant à la sortie précédente du système de fusion 3. Dans un tel mode de réalisation, la sortie prédite améliorée $\hat{y}_k$ est une sortie calculée à partir de la sortie du système de fusion (3) après traitement, par exemple par filtrage de type Kalman. Dans un tel mode de réalisation, la fonction d'erreur est déterminée entre la sortie prédite améliorée dérivée de la sortie du système de fusion et la sortie du système de fusion.

Dans un mode de réalisation, la sortie prédite $y_k$ par le réseau de neurones 50 peut être la réponse du réseau de neurones 50 à une valeur d'entrée correspondant aux captures en temps réel prises par un capteur 200. Dans un tel mode de réalisation, la sortie prédite améliorée $\hat{y}_k$ peut être la sortie calculée à partir de la sortie du système de fusion (3) après traitement, par exemple par filtrage de type Kalman ou la sortie de fusion elle-même. Dans un tel mode de réalisation, la fonction d'erreur est déterminée entre la sortie prédite améliorée dérivée de la sortie du système de fusion et la sortie du système de perception.

Dans un mode de réalisation, la sortie prédite $y_k$ par le réseau de neurones 50 peut être la réponse du réseau de neurones 50 à une valeur d'entrée correspondant à la sortie précédente du système de fusion 3. Dans un tel mode de réalisation, la sortie prédite améliorée $\hat{y}_k$ est une sortie calculée à partir de la sortie du système de fusion (3) après traitement, par exemple par filtrage de type Kalman. Dans un tel mode de réalisation, la fonction d'erreur est déterminée entre la sortie prédite améliorée dérivée de la sortie du système de fusion et la sortie du système de fusion.

L'homme du métier comprendra aisément que l'invention n'est pas limitée à une grandeur estimée par le dispositif d'estimation 100 de type vecteur d'état comprenant des positions d'objet x, y et une matrice de covariance.

Par exemple, dans une application de l'invention à la détection d'objet, le réseau de neurones 50 peut être par exemple un réseau de neurones de type YOLO (réseau de neurones de convolutions ne chargeant l'image qu'une seule fois avant d'effectuer la détection).

Dans un tel exemple de réalisation, pour détecter des objets, un cadre rectangulaire ('bounding box') peut être prédit autour des objets d'intérêt par le réseau de neurones 50. A chaque cadre rectangulaire est associé un vecteur comprenant un ensemble de caractéristiques d'objets pour chaque objet, constituant la grandeur estimée par le dispositif d'estimation 100 et comprenant par exemple :

- une probabilité de présence d'objet $p_c$,

- des coordonnées définissant la position du cadre rectangulaire ($b_x$, $b_y$, $b_h$, $b_w$) dans un repère cartésien, et

- une probabilité que l'objet appartienne à une ou plusieurs classes ($c_1$, $c_2$,..., $c_M$), comme par exemple une classe voiture, une classe camion, une classe piéton, une classe moto, etc.

Dans un exemple d'application de l'invention à la détection d'objet, la détermination de la sortie prédite améliorée $\hat{x}_{K|N}$ dérivée de la sortie prédite de fusion $y_{fusion}$ peut utiliser une technique de filtrage de Kalman. Un tel traitement de filtrage peut être mis en œuvre par l'unité de transformation 1003.

Le système de fusion 3 peut ainsi utiliser un filtrage de Kalman pour fournir une estimation améliorée $\hat{x}_{k|N}$ des données d'objet de $y_k$ (données d'objet consolidées de détection ou donnée de prédiction).

Pour k = 0 à N, les équations suivantes pour un vecteur d'état $x_k$ à l'instant k sont considérées:

$$x_{k+1} = A_k x_k + u_k + \alpha_k$$

(Modèle de prédiction avec $\alpha_k$ représentant un bruit gaussien)

$$y_k = C_k x_k + \beta_k$$

(Modèle d'observation avec $\beta_k$ représentant un bruit gaussien)

Le vecteur d'état est une variable aléatoire notée $\hat{x}_{k|k}$, à l'instant k sur la base du dernier traitement de mesure à l'instant k' où k'= k ou k-1. Cette variable aléatoire est caractérisée par un vecteur moyen estimé $\hat{x}_{k|k-1}$ et une matrice de covariance de l'erreur de prédiction associée, notée $\Gamma_{k|k-1}$.

L'étape de filtrage de Kalman comprend deux étapes principales.

Dans une première étape dite de prédiction, une prédiction est effectuée consistant à déterminer :

- La moyenne prédite :

$$x_{k+1} = A_k x_k + u_k$$

- La covariance prédite (représentant le niveau d'augmentation d'incertitude):

$$\Gamma_{k|k+1} = A_k \Gamma_{k|k} A_k^T + \Gamma_{\alpha k}$$

Dans une deuxième étape dite « étape de correction », les valeurs prédites à l'étape de prédiction du filtrage de Kalman sont corrigées en déterminant :

- L' "innovation" (différence entre la valeur mesurée et la valeur prédite) dérivée de la mesure $y_k$ pour laquelle le réseau de neurone 50 est utilisé comme système de mesure :

$$\tilde{y}_k = y_k - C_k \hat{x}_{k|k-1}$$

- L'« Innovation » de covariance :

$$S_k = C_k \Gamma_{k|k-1} C_k^T + \Gamma_{\beta k}$$

- Le Gain de Kalman :

$$K_k = \Gamma_{k|k-1} C_k^T S_k^{-1}$$

- La Moyenne corrigée :

$$x_{k|k} = x_{k|k-1} + K_k \tilde{y}_k$$

- La Covariance corrigée représentant le niveau de diminution d'incertitude:

$$\Gamma_{k|k} = (I - K_k C_k) \Gamma_{k|k-1}$$

Pour pouvoir utiliser un tel filtrage de Kalman, les données produites par le filtre de Kalman (données de fusion) peuvent être avantageusement stockées pendant une durée dans la mémoire tampon de rejeu 1002.

Les données stockées peuvent être en outre traitées par un lissage de Kalman, pour améliorer la précision des estimations de Kalman. Un tel traitement est adapté à un apprentissage en ligne, l'apprentissage en ligne incrémental selon l'invention pouvant être retardé.

Le lissage de Kalman comprend la mise en œuvre des traitements suivants pour K= 0 à N :

$$J_k = \Gamma_{k|k} A_k^T \Gamma_{k+1|k}^{-1}$$

$$\hat{x}_{k|N} = \hat{x}_{k|k} + K_k(\hat{x}_{k+1|N} - \hat{x}_{k+1|k})$$

$$\Gamma_{k|N} = \Gamma_{k|k} + J_k\left(\Gamma_{k+1|N} - \Gamma_{k+1|k}\right)J_k^T$$

L'étape de lissage appliquée aux sorties de fusion capteur stockées dans la mémoire tampon 1002 fournit une estimée $\hat{x}_{k|N}$ plus précise des valeurs $y_k$ prédites par le réseau de neurones 50.

Dans un premier exemple d'application de l'invention à la détection d'objet, selon certains modes de réalisation, il est considéré par exemple un réseau de neurone de type Yolo et 3 classes, pour lequel la grandeur estimée par le dispositif d'estimation est donnée par :

$$y_k = [\text{p}_\text{c}\ \ \text{b}_\text{x}\ \ \text{b}_\text{y}\ \ \text{b}_\text{h}\ \ \text{b}_\text{w}\ \ \text{c}_1\ \ \text{c}_2\ \ \text{c}_3\ ]^\text{T}$$

Il est en outre considéré :

- Les coordonnées d'un cadre rectangulaire ('bounding box') associées à la perte de localisation, désignées par ($x_i$, $y_i$, $w_i$, $h_i$) ;

- Un score de confidence $c_i$ représentant le niveau de confiance du modèle selon lequel le cadre contient l'objet ;

- Des probabilités de classe conditionnelles représentées par Pr(Class$_i$|Objet).

La fonction de perte $L(y_k, \hat{y}_k)$ peut-être par exemple définie à partir des paramètres $x_i$, $y_i$, $w_i$, $h_i$, $c_i$ et Pr(Class$_i$|Objet).

Dans un tel premier exemple, le procédé d'apprentissage met en œuvre les étapes 402 à 408 comme décrit ci-dessous :

A l'étape 402, le réseau de neurones 50 prédit la sortie :

$$\hat{y}_k = NeuralNetwork\,(x,\theta)$$

- A l'étape 404, la valeur prédite $y_k$ est mise à la valeur de fusion correspondante $\hat{x}_{k|N}$ déterminée par le système de fusion 2.

- A l'étape 406, la fonction de perte $L(y_k = \hat{x}_{k|N}, \hat{y}_k)$ est calculée pour chaque objet détecté (par exemple pour chaque cadre rectangulaire dans l'exemple du réseau de neurone Yolo) en utilisant par exemple un algorithme de suppression non maximal.

- A l'étape 408, l'étape de mise à jour des poids du réseau de neurones est mise en œuvre pour chaque objet détecté (pour chaque cadre rectangulaire dans l'exemple du réseau de neurone Yolo) ) par utilisation d'un algorithme de descente de gradient, chaque poids $\theta$ étant mis à jour à la valeur $\theta - \alpha\nabla_\theta L(\hat{x}_{k|N}, \hat{y}_k)$.

Les poids $\theta$ mis à jour à l'étape 404 peuvent être ajustés de sorte que la nouvelle prédiction du réseau de neurone 50 soit aussi proche que possible de l'estimée $\hat{x}_{k|N}$ améliorée de $y_k$.

Dans un deuxième exemple d'application, le procédé d'estimation peut être appliqué à la prédiction de trajectoire.

Dans la suite, la notation $y^{(i)}$ sera utilisée pour représenter le vecteur de trajectoire prédit :

$$y^{(i)} = \left[\begin{bmatrix}x\\y\end{bmatrix}_1 \cdots\cdots \begin{bmatrix}x\\y\end{bmatrix}_{T_y}\right]$$

Par ailleurs, la notation $\hat{y}^{(i)}$ sera utilisée pour représenter le vecteur de trajectoire de fusion :

$$\hat{y}^{(i)} = \begin{bmatrix} \begin{bmatrix} \mu_x \\ \mu_y \\ \sigma_x \\ \sigma_y \\ \rho \end{bmatrix}_1 \cdots\cdots \begin{bmatrix} \mu_x \\ \mu_y \\ \sigma_x \\ \sigma_y \\ \rho \end{bmatrix}_{T_y} \end{bmatrix}$$

Dans ce deuxième exemple, il est considéré que le système de perception 2 n'utilise pas de mémoire 1002 de type mémoire tampon de rejeu 1002 pour stocker les données utilisées pour déterminer la fonction de perte.

Par ailleurs, pour garantir que les données de fusion sont des données « iid », un compteur de temps aléatoire peut être utilisé, sa valeur étant fixée après chaque mise à jour des poids.

Lorsque la valeur fixée pour le compteur de temps a expiré, une nouvelle mise à jour des poids peut être effectuée de manière itérative.

La fonction de perte L ou fonction de perte peut être tout type de fonction de perte incluant une fonction d'erreur quadratique, une fonction de probabilité log négative ('Negative Log Likelihood'), etc.

Dans le deuxième exemple considéré, il est supposé que la fonction de perte $L_{nll}$ est utilisée, appliquée à une distribution gaussienne bivariée. Cependant, l'homme du métier comprendra aisément que toute autre fonction de perte peut être utilisé. La fonction $L_{nll}$ est définie par :

$$L = \log\left(\sigma_x \sigma_y \sqrt{1-\rho^2}\right) + \frac{0}{1-\rho^2}\left[\frac{(x-\mu_x)^2}{\sigma_x^2} + \frac{(y-\mu_y)^2}{\sigma_y^2} - \frac{2\rho(x-\mu_x)(y-\mu_y)}{\sigma_x \sigma_y}\right]$$

Le procédé d'apprentissage en ligne, dans un tel deuxième exemple, implémente les étapes de la figure 4 comme suit:

- A l'étape 400, un vecteur de trajectoire $x^{(i)}$, correspondant à la capture d'un capteur 200 du système de perception 2, est appliqué en entrée du réseau de neurones 50.

- A l'étape 402, la trajectoire prédite $\hat{y}^{(i)}$ est déterminée sur T secondes à partir du vecteur de trajectoire $x^{(i)}$ appliqué en entrée du réseau de neurones et des poids $\theta$ courants du réseau de neurones :

$$\hat{y}^{(i)} = NeuralNet\left(x^{(i)}, \theta\right)$$

- A l'étape 403, le couple $(\hat{y}^{(i)}, x^{(i)})$ comprenant la trajectoire prédite $\hat{y}^{(i)} = \hat{y}^{(i)}_{perception}$ et la vecteur de trajectoire d'entrée $x^{(i)}$ sont sauvegardés dans une mémoire 1002.

- Le procédé est mis en attente jusqu'à l'expiration de T secondes (minuteur).

- A l'étape 404, le vecteur de trajectoire de fusion $y_{fusion}$ est déterminé.

- A l'étape 406, la fonction de perte est calculée représentant l'erreur entre la sortie du système de fusion et la sortie du système de perception 2.

- A l'étape 408, la valeur des poids $\theta$ est mise à $\theta - \alpha\nabla_\theta L\left(y_{fusion}, \hat{y}^{(i)}_{perception}\right)$.

- La paire sauvegardée peut être ensuite supprimée et une nouvelle valeur peut être fixée pour le compteur de temps.

Les étapes précédentes peuvent être réitérées jusqu'à ce qu'une condition de convergence soit satisfaite.

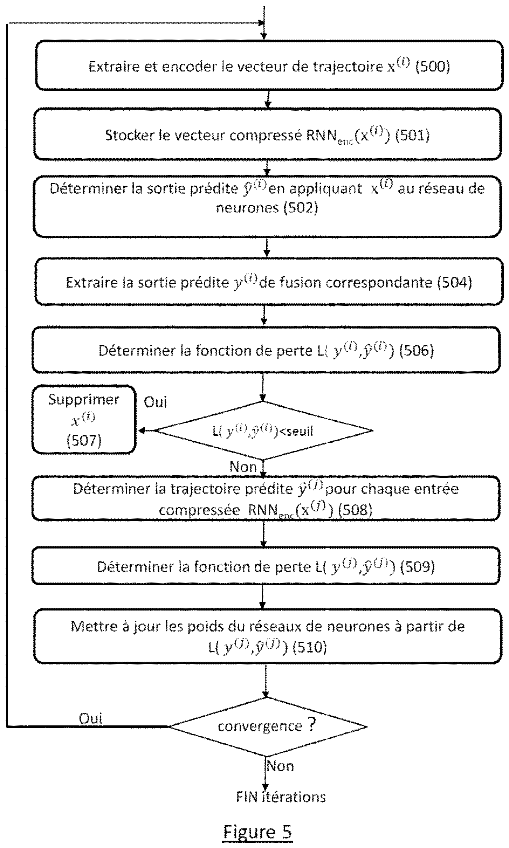

La figure 5 est un organigramme représentant le procédé d'apprentissage selon un troisième exemple dans une application de l'invention à la prédiction de trajectoire (la grandeur estimée par le procédé d'estimation de grandeur relative à un objet détecté comprend des paramètres de trajectoire d'objet).

Dans un tel exemple de réalisation, le procédé d'apprentissage en ligne utilise une mémoire tampon de rejeu d'expérience prioritisée 1002.

Dans ce mode de réalisation, pour chaque prédiction de trajectoire, une perte de prédiction associée est calculée en ligne en utilisant la sortie du système de fusion retardée ou non.

La réalité de terrain correspondant à la valeur prédite peut être approximée en effectuant des mises à jour la sortie du système de fusion (retardée ou non).

La fonction de perte peut être calculée entre une sortie prédite améliorée dérivée de la sortie de fusion $y_{fusion}$ (retardée ou non) et la trajectoire prédite par le réseau de neurones $\hat{y}_{pred}^{(i)}$ pour chaque capteur considéré. En fonction d'une valeur de seuil, il peut être déterminé en outre si une entrée $x^{(i)}$ est utile ou non à l'apprentissage en ligne. Si elle est déterminée comme utile à l'apprentissage, une représentation compacte de la trajectoire associée à cette entrée, par exemple déterminé au moyen d'un encodeur RNN 1001, peut être stockée dans la mémoire tampon de rejeu 1002 (mémoire tampon de rejeu d'expérience).

Un tel mode de réalisation permet d'optimiser et de prioritiser l'expérience correspondant aux entrées utilisées pour alimenter la table d'apprentissage 12. Par ailleurs, les données stockées dans la mémoire tampon de rejeu 1002 peuvent être échantillonnées aléatoirement pour garantir que les données sont « iid » (par l'unité de transformation 1003). Ce mode de réalisation permet une optimisation des échantillons utilisés et une réutilisation des échantillons.

L'utilisation de l'encodeur RNN permet d'optimiser la mémoire tampon de rejeu 1002 en compressant les informations de trajectoires.

Dans l'exemple de la figure 5, la fonction de perte $L_{nll}$ est également utilisée à titre d'exemple non limitatif.

A l'étape 500, l'historique du vecteur de trajectoire $x^{(i)}$ est extrait et est encodée par l'encodeur RNN 1001, ce qui fournit un vecteur compressé $RNN_{enc}(x^{(i)})$.

A l'étape 501, le vecteur compressé $RNN_{enc}(x^{(i)})$ (échantillon encodé) est stocké dans la mémoire tampon de rejeu 1002.

A l'étape 502, la trajectoire prédite $\hat{y}^{(i)}$ est déterminée à partir du vecteur de trajectoire $x^{(i)}$ appliqué en entrée du réseau de neurones 50 et des poids $\theta$ courants du réseau de neurones, avec $\hat{y}^{(i)} = \hat{y}_{pred}^{(i)}$ :

$$\hat{y}^{(i)} = NeuralNet\left(\mathrm{x}^{(i)}, \theta\right)$$

A l'étape 504, le vecteur de trajectoire de fusion $y^{(i)}$ préalablement déterminé par le système de fusion est extrait (mode de réalisation avec retard).

A l'étape 506, la fonction de perte est calculée à partir de la sortie de fusion $y^{(i)}$ et des valeurs prédites $\hat{y}_{pred}^{(i)}$ correspondant à la sortie de perception, et des poids courants $\theta$ du réseau : $L\left(y^{(i)}, \hat{y}_{pred}^{(i)}\right)$, dans un mode de réalisation avec retard.

A l'étape 507, si la fonction de perte $L\left(y^{(i)}, \hat{y}_{pred}^{(i)}\right)$ est petite par rapport à un seuil, la valeur d'échantillon $x^{(i)}$ est supprimée de la mémoire tampon 1002 (non utile).

A l'étape 508, pour chaque échantillon compressé $RNN_{enc}(x^{(j)})$ de la mémoire tampon 1002, la trajectoire prédite $\hat{y}^{(j)}$ est déterminée à partir du vecteur de trajectoire compressé $RNN_{enc}(x^{(j)})$ et des poids $\theta$ courants du réseau de neurones:

$$\hat{y}^{(j)} = NeuralNet\left(\mathrm{RNNenc}(\mathrm{x}^{(j)}), \theta\right)$$

A l'étape 509, la fonction de perte est de nouveau calculée à partir de la valeur prédite $\hat{y}^{(j)}$ fournie en sortie du réseau de neurone 50, de la valeur de sortie prédite améliorée (sortie de fusion $y^{(j)}$) correspondante et des poids courants $\theta$ du réseau : $L(y^{(j)}, \hat{y}^{(j)})$.

A l'étape 510, la valeur des poids $\theta$ est mise à $\theta - \alpha\nabla_\theta L\left(y^{(j)}, \hat{y}_{pred}^{(j)}\right)$.

Les étapes précédentes peuvent être itérées jusqu'à ce qu'une condition de convergence soit détectée.

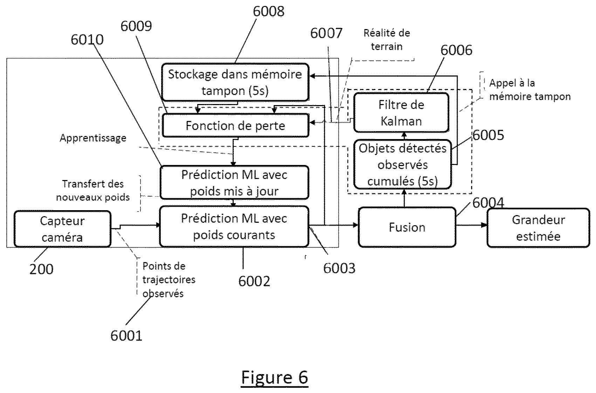

La figure 6 montre un exemple d'implémentation du système de contrôle 10 dans lequel le système de perception 2 utilise un unique capteur 200 de type caméra intelligente pour une application de l'invention à la prédiction de trajectoire d'objet.

Dans cet exemple, le capteur (200) de type caméra observe des points de trajectoire d'un objet cible détecté dans l'environnement du véhicule (6001). Les données capturées par le capteur 200 sont utilisées pour prédire une trajectoire de l'objet cible avec les poids courants (6002) en utilisant l'unité d'apprentissage machine 5 basée sur le réseau de neurones 50.

Le réseau de neurones 50 fournit une sortie prédite (6003) représentant la trajectoire prédite par le réseau de neurones 50 à partir des données du capteur 200 appliquées en entrée du réseau de neurones 50.

La sortie prédite est transmise au système de fusion (3) qui calcule une sortie prédite améliorée (6004) correspondant à la grandeur estimé par le dispositif d'estimation 100. Dans cet exemple la grandeur représente la trajectoire de l'objet cible prédite et comprend des paramètres de trajectoire.

Le dispositif d'estimation fournit la trajectoire prédite au système d'aide à la conduite 10 pour une utilisation par une application de contrôle 14.

Par ailleurs, le système de fusion 3 transmet la sortie prédite améliorée à l'unité de calcul d'erreur 4. L'unité de calcul d'erreur peut stocker (6008) les sorties prédites (sorties de perception) dans une mémoire tampon 1002 où sont cumulées les sorties correspondant à des observations (6005) sur une période de temps prédéfinie (par exemple 5s).

L'unité de transformation 1003 peut appliquer des traitements complémentaires pour améliorer encore la précision des sorties prédites améliorées, par exemple en appliquant un filtre de Kalman (6006) comme décrit ci-avant, ce qui fournit une sortie prédite affinée (6007). L'unité de calcul d'erreur 4 détermine ensuite la fonction de perte (6009) représentant l'erreur entre la sortie du système de perception 2 et la sortie prédite affinée en utilisant les données stockées dans la mémoire tampon 1002 et la sortie prédite affinée. Les poids sont ensuite mis à jour en appliquant un algorithme de rétropropagation par descente de gradient en utilisant la fonction de perte entre la sortie prédite affinée (délivrée en sortie du filtre de Kalman 6006) et la sortie du système de perception et une nouvelle prédiction ML (6010) peut être mise en œuvre par le module d'apprentissage en ligne 50 en utilisant le réseau de neurones 50 avec les poids ainsi mis à jour.

Dans l'exemple de la figure 6, la sortie du système de fusion 3 est utilisée comme réalité de terrain pour l'apprentissage.

Dans le mode de réalisation de la figure 6, la fonction de perte correspond à l'erreur entre la sortie prédite affinée 6007 déterminée par le module de transformation 1003 et la sortie de perception 2 délivrée par le système de perception.

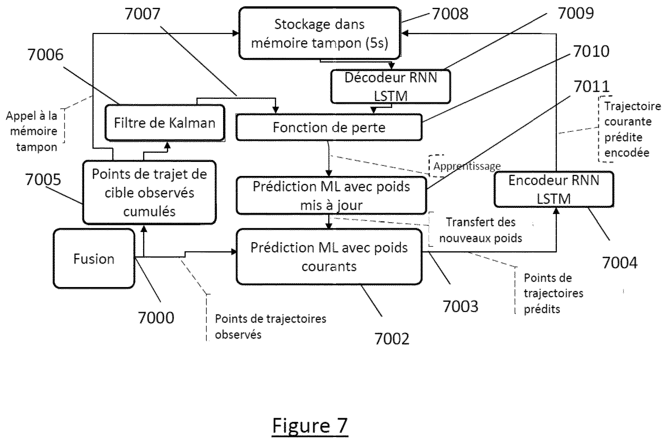

La figure 7 montre un autre exemple de mode de réalisation du système de contrôle 10 dans lequel un encodage/décodage RNN des données prédites par le réseau de neurones 50 est utilisé. Dans cet exemple la grandeur représente la trajectoire d'un objet cible prédite et comprend des paramètres de trajectoire. Par ailleurs, la sortie du système de fusion est utilisée comme réalité de terrain (entrée appliquée au réseau de neurone 50 pour l'apprentissage en ligne).

Dans le mode de réalisation de la figure 7, la sortie du système de fusion 3 est utilisée directement comme entrée appliquée au réseau de neurones pour déterminer la fonction de perte. La fonction de perte correspond alors à l'erreur entre la sortie du système de fusion 3 et la sortie prédite affinée délivrée par l'unité de transformation 3.

Dans le mode de réalisation de la figure 7, la sortie de fusion (sortie prédite améliorée) délivrée par le système de fusion 3 est appliquée en entrée du réseau de neurones 50 (7000) pour prédire une trajectoire d'un objet cible avec les poids courants (7002) en utilisant l'unité d'apprentissage machine 5 basée sur le réseau de neurones 50.

Le réseau de neurones 50 fournit une sortie prédite (7003) représentant la trajectoire prédite par le réseau de neurones 50 à partir des données du capteur 200 appliquées en entrée du réseau de neurones 50.

La sortie prédite est transmise à un encodeur RNN 1001 qui encode et compresse la sortie prédite par le réseau de neurone 50 (7004).

Par ailleurs, le système de fusion 3 transmet la sortie prédite améliorée à l'unité de calcul d'erreur 4. L'unité de calcul d'erreur peut stocker (7008) les sorties prédites dans une mémoire tampon 1002 où sont cumulées les sorties de perception correspondant à des observations (7005) sur une période de temps prédéfinie (par exemple 5s).

L'unité de transformation 1003 peut appliquer des traitements complémentaires pour améliorer encore la précision des sorties prédites améliorées, par exemple en appliquant un filtre de Kalman (7006) comme décrit ci-avant, ce qui fournit une sortie prédite affinée (7007). L'unité de calcul d'erreur 4 détermine ensuite la fonction de perte (7010) représentant l'erreur entre la sortie du système de perception 2 et la sortie prédite affinée en utilisant les données stockées dans la mémoire tampon 1002, après décodage par un décodeur RNN (7009) et la sortie prédite affinée 7007. Les poids sont ensuite mis à jour en appliquant un algorithme de rétropropagation par descente de gradient en utilisant la fonction de perte entre la sortie prédite affinée (délivrée en sortie du filtre de Kalman 6006) et la sortie du système de perception et une nouvelle prédiction ML (7011) peut être mise en œuvre par l'unité d'apprentissage en ligne 5 en utilisant le réseau de neurones 50 avec les poids ainsi mis à jour.

Une variante du mode de réalisation de la figure 7 peut être réalisée sans utiliser d'encodeur/décodeur RNN (blocs 7004 et 7009). Dans une telle variante la sortie 7003 est directement stockée dans la mémoire tampon (bloc 7008) et la fonction de perte est déterminée en utilisant directement les données de la mémoire tampon 1002, sans décodage RNN (bloc 7009).

Les modes de réalisation de l'invention permettent ainsi une estimation améliorée d'une grandeur relative à un objet détecté dans l'environnement du véhicule en mettant en œuvre un apprentissage en ligne.

L'apprentissage selon les modes de réalisation de l'invention permet de tenir compte de nouvelles images collectées en temps réel pendant le fonctionnement du véhicule et n'est pas limité à l'utilisation de données d'apprentissage stockées dans la base de données hors ligne. De nouvelles estimations peuvent être effectuées pendant le fonctionnement du système d'aide à la conduite, en utilisant des poids du réseau de neurones mis à jour en ligne.

L'homme du métier comprendra en outre que le système ou des sous-système selon les modes de réalisation de l'invention peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier.

En particulier, l'homme du métier comprendra que l'invention n'est pas limitée à des types de capteurs particuliers du système de perception 20, à un nombre particulier de capteurs.

L'invention n'est pas limitée à un type particulier de véhicule 1 et s'applique à tout type de véhicule (des exemples de véhicule incluent sans limitation des voitures, des camions, des bus, etc.). Bien que non limités à de telles applications, les modes de réalisation de l'invention ont un avantage particulier pour une mise en œuvre dans des véhicules autonomes connectés par des réseaux de communication leur permettant l'échange de messages V2X.

L'invention n'est pas non plus limitée à un type d'objet détecté dans l'environnement du véhicule et s'applique à tout objet détectable au moyen de capteurs 200 du système de perception 2 (piéton, camion, moto, etc.).

Par ailleurs, l'homme du métier comprendra aisément que la notion « d'environnement du véhicule » utilisé en relation avec la détection d'objet est définie en relation avec la portée des capteurs implémentés dans le véhicule.

L'invention n'est pas limitée aux grandeurs estimées par le dispositif d'estimation 100, décrite ci-avant à titre d'exemple non limitatif. Elle s'applique à toute grandeur relative à un objet détecté dans l'environnement du véhicule pouvant inclure des grandeurs relatives à la position de l'objet et/ou au mouvement de l'objet (vitesse, trajectoire, etc.) et/ou des caractéristiques d'objet (type d'objet, etc.). La grandeur peut avoir différents formats. Lorsque la grandeur estimée est un vecteur d'état comprenant un ensemble de paramètres, le nombre de paramètres peut dépendre de l'application de l'invention et des spécificités du système d'aide à la conduite.

L'invention n'est pas non plus limitée à l'exemple de réseau de neurones YO-LO cité à titre d'exemple dans la description et s'applique à tout type de réseau de neurones 50 utilisé pour des estimations de grandeurs relatives à des objets détectés ou détectables dans l'environnement du véhicule, à base d'apprentissage machine.

L'homme du métier comprendra aisément que l'invention n'est pas limitée aux exemples de fonction de perte cités dans la description ci-avant à titre d'exemple.

**Revendications**

**1.** Dispositif de contrôle (10) mis en œuvre dans un véhicule (1), le véhicule comprenant un système de perception (2) utilisant un ensemble de capteurs (200), chaque capteur fournissant des données, le système de perception comprenant un dispositif d'estimation (100) d'une grandeur comprenant au moins une caractéristique relative à un ou plusieurs objets détectés dans l'environnement du véhicule, le dispositif d'estimation comprenant un module d'apprentissage en ligne (5) utilisant un réseau de neurones (50) pour estimer ladite grandeur, le réseau de neurones étant associé à un ensemble de poids, **caractérisé en ce que** le module d'apprentissage (5) comprend :

- un module de propagation vers l'avant (51) configuré pour propager des données d'un ou plusieurs capteurs (200) appliquées en entrée du réseau de neurones, de manière à fournir une ou plusieurs sorties prédites ($X_{1C}$, $Y_{1C}$, $Cov_{1C}$, $X_{2C}$, $Y_{2C}$, $Cov_{2C}$, $X_{1L}$, $Y_{1L}$, $Cov_{1L}$, $x_{2L}$, $Y_{2L}$, $Cov_{2L}$) comprenant une estimation de ladite grandeur ;
- un système de fusion (3) configuré pour déterminer une sortie de fusion ($X_{1S}$, $Y_{1S}$, $Cov_{1S}$, $X_{2S}$, $Y_{2S}$, $Cov_{2S}$) en mettant en œuvre au moins un algorithme de fusion capteur à partir d'au moins certaines desdites une ou plusieurs sorties prédites,
- un module de rétropropagation (32) configuré pour mettre à jour les poids associés au réseau de neurone (50) en ligne, en déterminant une ou plusieurs fonctions de perte représentant l'erreur (DeltaObj1, DeltaObj2) entre une valeur prédite améliorée de ladite sortie de fusion et ladite sortie prédite, en effectuant une rétropropagation par descente de gradients.

2. Dispositif selon la revendication 1, **caractérisé en ce que** ladite grandeur est un vecteur d'état comprenant des informations relatives à la position et/ou au mouvement d'un objet détecté par le système de perception.

3. Dispositif selon la revendication 2, **caractérisé en ce que** ledit vecteur d'état comprend en outre des informations relatives à une ou plusieurs objets détectés.

4. Dispositif selon la revendication 3, **caractérisé en ce que** ledit vecteur d'état comprend en outre des paramètres de trajectoire d'un objet cible.

5. Dispositif selon l'une des revendications précédentes, **caractérisé en ce que** ladite valeur prédite améliorée est déterminée en appliquant un filtre de Kalman.

6. Dispositif selon l'une des revendications précédentes, **caractérisé en ce qu'**il comprend une mémoire tampon de rejeu (1002) configurée pour stocker les sorties prédites par le dispositif d'estimation (100) et/ou les sorties de fusion délivrées par le système de fusion (2).

7. Dispositif selon l'une des revendications précédentes, **caractérisé en ce qu'**il comprend un encodeur pour réseau de neurones récurrents (1002) configuré pour encoder et compresser les données avant stockage dans la mémoire tampon de rejeu, et un décodeur pour décoder et décompresser les données extraites de la mémoire tampon de rejeu (1002).

8. Dispositif selon la revendication 7, **caractérisé en ce que** l'encodeur est un encodeur pour réseau de neurones récurrent et le décodeur est un décodeur pour réseau de neurones récurrent.

9. Dispositif selon l'une des revendications précédentes 6 à 8, **caractérisé en ce que** la mémoire tampon de rejeu est prioritisée.

10. Dispositif selon l'une des revendications précédentes 6 à 8, **caractérisé en ce qu'**il met en œuvre une condition de test de données d'entrée appliquées en entrée d'un réseau de neurones (50), des données d'entrée étant supprimées de la mémoire tampon de rejeu (1002) si la fonction de perte entre la valeur prédite pour cet échantillon d'entrée et la sortie de fusion est inférieur à un seuil prédéfini.

**Patentansprüche**

1. Vorrichtung zur Steuerung (10), die in einem Fahrzeug (1) eingesetzt wird, wobei das Fahrzeug ein Wahrnehmungssystem (2) umfasst, das eine Menge von Sensoren (200) verwendet, wobei jeder Sensor Daten liefert, wobei das Wahrnehmungssystem eine Schätzvorrichtung (100) für eine Größe umfasst, die mindestens ein Merkmal bezüglich eines oder mehrerer im Umfeld des Fahrzeugs detektierter Objekte umfasst, wobei die Schätzvorrichtung ein Online-Lernmodul (5) umfasst, das zum Schätzen der Größe ein neuronales Netz (50) verwendet, wobei das neuronale Netz einer Menge von Gewichten zugeordnet ist, **dadurch gekennzeichnet, dass** das Lernmodul (5) umfasst:

- ein Modul zur Vorwärtspropagation (51), das dazu ausgestaltet ist, Daten eines oder mehrerer Sensoren (200), die als Eingabe des neuronalen Netzes angewendet werden, weiterzuleiten, so dass eine oder mehrere vorhergesagte Ausgaben ($X_{1C}$, $Y_{1C}$, $Cov_{1C}$, $X_{2C}$, $Y_{2C}$, $Cov_{2C}$, $X_{1L}$, $Y_{1L}$, $Cov_{1L}$, $x_{2L}$, $Y_{2L}$, $Cov_{2L}$) geliefert werden, die eine Schätzung der Größe umfassen;
- ein Fusionssystem (3), das dazu ausgestaltet ist, einen Fusionsausgabe ($X_{1S}$, $Y_{1S}$, $Cov_{1S}$, $X_{2S}$, $Y_{2S}$, $Cov_{2S}$) zu bestimmen, indem mindestens ein Sensorfusionsalgorithmus ausgehend von mindestens einigen der einen oder mehreren vorhergesagten Ausgaben eingesetzt wird,
- ein Backpropagationsmodul (32), das dazu ausgestaltet ist, die dem neuronalen Netz (50) zugeordneten Gewichte online zu aktualisieren, indem eine oder mehrere Verlustfunktionen bestimmt werden, die den Fehler (DeltaObj1, DeltaObj2) zwischen einem verbesserten vorhergesagten Wert der Fusionsausgabe und der vorhergesagten Ausgabe repräsentieren, indem eine Backpropagation durch Gradientenabstieg durchgeführt wird.

2. Vorrichtung nach Anspruch 1, **dadurch gekennzeichnet, dass** die Größe ein Zustandsvektor ist, der Informationen bezüglich der Position und/oder der Bewegung eines von dem Wahrnehmungssystem detektierten Objekts umfasst.

**3.** Vorrichtung nach Anspruch 2, **dadurch gekennzeichnet, dass** der Zustandsvektor ferner Informationen bezüglich eines oder mehrerer detektierter Objekte umfasst.

**4.** Vorrichtung nach Anspruch 3, **dadurch gekennzeichnet, dass** der Zustandsvektor ferner Trajektorienparameter eines Zielobjekts umfasst.

**5.** Vorrichtung nach einem der vorhergehenden Ansprüche, **dadurch gekennzeichnet, dass** der verbesserte vorhergesagte Wert unter Anwendung eines Kalman-Filters bestimmt wird.

**6.** Vorrichtung nach einem der vorhergehenden Ansprüche, **dadurch gekennzeichnet, dass** es einen Wiedergabepufferspeicher (1002) umfasst, der dazu ausgestaltet ist, die von der Schätzvorrichtung (100) vorhergesagten Ausgaben und/oder die von dem Fusionssystem (2) ausgegebenen Fusionsausgaben zu speichern.

**7.** Vorrichtung nach einem der vorhergehenden Ansprüche, **dadurch gekennzeichnet, dass** sie einen Encoder für ein rekurrentes neuronales Netz (1002), der dazu ausgestaltet ist, die Daten vor dem Speichern in dem Wiedergabepufferspeicher zu codieren und zu komprimieren, und einen Decoder, um die aus dem Wiedergabepufferspeicher (1002) gezogenen Daten zu decodieren und zu dekomprimieren, umfasst.

**8.** Vorrichtung nach Anspruch 7, **dadurch gekennzeichnet, dass** der Encoder ein Encoder für ein rekurrentes neuronales Netz ist und der Decoder ein Decoder für ein rekurrentes neuronales Netz ist.

**9.** Vorrichtung nach einem der Ansprüche 6 bis 8, **dadurch gekennzeichnet, dass** der Wiedergabepufferspeicher priorisiert ist.

**10.** Vorrichtung nach einem der Ansprüche 6 bis 8, **dadurch gekennzeichnet, dass** sie eine Testbedingung für die als Eingabe eines neuronalen Netzes (50) angewendeten Eingabedaten einsetzt, wobei Eingabedaten aus dem Wiedergabepufferspeicher (1002) gelöscht werden, wenn die Verlustfunktion zwischen dem für diese Eingabestichprobe vorhergesagten Wert und der Fusionsausgabe geringer als ein vorgegebener Schwellenwert ist.

**Claims**

**1.** Control device (10) implemented in a vehicle (1), the vehicle comprising a perception system (2) using a set of sensors (200), each sensor providing data, the perception system comprising an estimation device (100) for estimating a variable comprising at least one feature in relation to one or more objects detected in the environment of the vehicle, the estimation device comprising an online learning module (5) using a neural network (50) to estimate said variable, the neural network being associated with a set of weights, **characterized in that** the learning module (5) comprises:

- a forward propagation module (51) configured to propagate data from one or more sensors (200) applied at input of the neural network, so as to provide one or more predicted outputs ($X_{1C}$, $Y_{1C}$, $Cov_{1C}$, $X_{2C}$, $Y_{2C}$, $Cov_{2C}$, $X_{1L}$, $Y_{1L}$, $Cov_{1L}$, $x_{2L}$, $Y_{2L}$, $Cov_{2L}$) comprising an estimation of said variable;
- a fusion system (3) configured to determine a fusion output ($X_{1S}$, $Y_{1S}$, $Cov_{1S}$, $X_{2S}$, $Y_{2S}$, $Cov_{2S}$) by implementing at least one sensor fusion algorithm based on at least some of said one or more predicted outputs,
- a backpropagation module (32) configured to update the weights associated with the neural network (50) online by determining one or more loss functions representing the error (DeltaObj1, DeltaObj2) between an improved predicted value of said fusion output and said predicted output by performing a gradient descent backpropagation.

**2.** Device according to Claim 1, **characterized in that** said variable is a state vector comprising information in relation to the position and/or the movement of an object detected by the perception system.

**3.** Device according to Claim 2, **characterized in that** said state vector furthermore comprises information in relation to one or more detected objects.

**4.** Device according to Claim 3, **characterized in that** said state vector furthermore comprises trajectory parameters of a target object.

**5.** Device according to one of the preceding claims, **characterized in that** said improved predicted value is determined by applying a Kalman filter.

6. Device according to one of the preceding claims, **characterized in that** it comprises a replay buffer (1002) configured to store the outputs predicted by the estimation device (100) and/or the fusion outputs delivered by the fusion system (2).

7. Device according to one of the preceding claims, **characterized in that** it comprises a recurrent neural network encoder (1002) configured to encode and compress the data prior to storage in the replay buffer, and a decoder for decoding and decompressing the data extracted from the replay buffer (1002).

8. Device according to Claim 7, **characterized in that** the encoder is a recurrent neural network encoder and the decoder is a recurrent neural network decoder.

9. Device according to one of preceding Claims 6 to 8, **characterized in that** the replay buffer is prioritized.

10. Device according to one of preceding Claims 6 to 8, **characterized in that** it implements a condition for testing input data applied at input of a neural network (50), input data being deleted from the replay buffer (1002) if the loss function between the value predicted for this input sample and the fusion output is lower than a predefined threshold.

Figure 1

Figure 2

307
Mise à jour poids du modèle

Boucle de rétroaction du Système de fusion vers le système de perception

305
Mise à jour d'Erreur

Mise à jour du modèle de perception

Système de fusion de capteur

Delta Obj1:$X_{1S}$-$X_{1C}$, $Y_{1S}$-$Y_{1C}$
Delta Obj2:$X_{2S}$-$X_{2C}$, $Y_{2S}$-$Y_{2C}$

Modèle de détection d'objet de Caméra

Obj1:$X_{1C}$,$Y_{1C}$,$Cov_{1C}$
Obj2:$X_{2C}$,$Y_{2C}$,$Cov_{2C}$

Détection d'objet LIDAR

Obj1:$X_{1L}$,$Y_{1L}$,$Cov_{1L}$
Obj2:$X_{2L}$,$Y_{2L}$,$Cov_{2L}$

Obj1:$X_{1S}$,$Y_{1S}$,$Cov_{1S}$
Obj2:$X_{2S}$,$Y_{2S}$,$Cov_{2S}$

304

300

302

2

3

Figure 3

Appliquer une entrée $x$ au réseau de neurones (400)

Déterminer la sortie prédite $\hat{y}_{pred}$ par le réseau de neurones (402)

Calculer la sortie prédite $y_{fusion}$ de fusion (404)

Déterminer la fonction de perte entre une sortie prédite améliorée dérivée de la sortie prédite de fusion $y_{fusion}$ et la sortie prédite $\hat{y}_{pred}$ (406)

Mettre à jour les poids du réseaux de neurones à partir de la fonction de perte par rétropropagation de descente de gradient (408)

Non

Critère de convergence satisfait ?

Oui

FIN itérations

Figure 4

Extraire et encoder le vecteur de trajectoire $x^{(i)}$ (500)

Stocker le vecteur compressé $RNN_{enc}(x^{(i)})$ (501)

Déterminer la sortie prédite $\hat{y}^{(i)}$ en appliquant $x^{(i)}$ au réseau de neurones (502)

Extraire la sortie prédite $y^{(i)}$ de fusion correspondante (504)

Déterminer la fonction de perte $L(y^{(i)}, \hat{y}^{(i)})$ (506)

Supprimer $x^{(i)}$ (507)

Oui

$L(y^{(i)}, \hat{y}^{(i)}) <$ seuil

Non

Déterminer la trajectoire prédite $\hat{y}^{(j)}$ pour chaque entrée compressée $RNN_{enc}(x^{(j)})$ (508)

Déterminer la fonction de perte $L(y^{(j)}, \hat{y}^{(j)})$ (509)

Mettre à jour les poids du réseaux de neurones à partir de $L(y^{(j)}, \hat{y}^{(j)})$ (510)

Oui

convergence ?

Non

FIN itérations

Figure 5

Figure 6

7007　　　Stockage dans　7008　　7009
　　　　mémoire tampon (5s)
7006　　　　　　　　　　　　　　　　7010
　　　　　　　　　　　Décodeur RNN　　7011
　　　　　　　　　　　　LSTM
Appel à la　　Filtre de Kalman　Fonction de perte　　Trajectoire
mémoire　　　　　　　　　　　　　　　　courante
tampon　　　　　　　　　　　　　　　　prédite
　　　　　　　　　　　　　　　Apprentissage　encodée
7005　Points de trajet de
　　　cible observés　　Prédiction ML avec poids　Encodeur RNN
　　　cumulés　　　　　mis à jour　　　　　LSTM
　　　　　　　　　　　　　　　Transfert des
　　Fusion　　　Prédiction ML avec poids　nouveaux poids
　　　　　　　　courants　　　　　　　　　7004
　　　　　　　　　　　　　　　　　　Points de
7000　Points de trajectoires　7003　trajectoires
　　　observés　　　　　　　　　　prédits
　　　　　　　　　　7002

**Figure 7**

## RÉFÉRENCES CITÉES DANS LA DESCRIPTION

**Documents brevets cités dans la description**

- US 10254759 B1
- US 20180124423 A1
- US 20190184561 A1